# EUROPÄISCHE PATENTANMELDUNG

(11) **EP 2 269 494 A1**
(43) Veröffentlichungstag der Anmeldung: **05.01.2011**
(21) Anmeldenummer: 09008521.8
(22) Anmeldetag: 30.06.2009
(51) Int. Cl.: A47J 43/07

(54) **Kopfteil für ein Rührwerkzeug**

(71) Anmelder: Braun GmbH, 61476 Kronberg (DE)
(72) Erfinder: Ring, Martin, Dr., 61479 Glashütten (DE); Preiss, Thomas, 64297 Darmstadt (DE)

(57) **Zusammenfassung**

Die vorliegende Erfindung betrifft ein Rührwerkzeug, vorzugsweise für eine Küchenmaschine. Insbesondere geht es um ein Rührwerkzeug, mit einem um eine Antriebsachse in einer Rotationsrichtung rotierbaren Nabenteil, wobei das Nabenteil eine erste Oberfläche hat, welche mindestens eine Senke aufweist, **dadurch gekennzeichnet, daß** im Bereich der Senke eine Aussparung vorgesehen ist, durch welche die erste Oberfläche mit einer zweiten Oberfläche des Nabenteils verbunden wird.

## Beschreibung

### Gebiet der Erfindung

Die vorliegende Erfindung betrifft ein Rührwerkzeug und insbesondere sein Kopfteil und seine Nabe, vorzugsweise für eine Küchenmaschine. Beispielsweise kann das Rührwerkzeug in einem Standgerät (welches typischerweise mit einer Rührschüssel verbunden ist) eingesetzt werden. Es kann ebenfalls in einem Handmixer eingesetzt werden. Insbesondere ist es auch für den Einsatz mit der Antriebseinheit eines Pürierstabes geeignet.

### Hintergrund der Erfindung

Für Küchenmaschinen, aber auch für andere Mischungs-, Rühr- und Zerkleinerungsaufgaben ist eine Vielzahl von Rührwerkzeugen bekannt.

US 2006/0062079 A1 (Anmelderin: Ekato Solidmix GmbH) offenbart ein Rührwerkzeug mit zwei verstellbaren Armen zum Einsatz in einem Rührtrog. Dieses Rührwerkzeug kann durch ein Zerkleinerungswerkzeug ergänzt werden. Die mechanische Konstruktion ist anspruchsvoll. Die zusätzliche Benutzung eines Zerkleinerungswerkzeuges erscheint eher aufwendig.

EP 1982624 A1 (Electrodomesticos Taurus S.L.) offenbart ein Küchenwerkzeug, insbesondere für einen Pürierstab. Dieses Werkzeug soll drei oder mehr Klingen aufweisen und aus Metall gefertigt sein. Die Klingen sind in verschiedenen Winkelrichtungen ausgerichtet, um das Durchmischen von Nahrungsmitteln in einem Rührtopf zu fördern. Abgesehen von ihrer Ausrichtung sind die Klingen im Wesentlichen von einfacher symmetrischer Form. Daher erscheint es unwahrscheinlich, dass ein Rührergebnis erzielt werden kann, welches etwa zum Rühren von Kuchenteig ausreichend wäre.

US 2,193,686 (Craddock) offenbart ein Rührwerkzeug mit im Wesentlichen propellerförmigen Rührblättern, welche zusätzlich bestimmte Krallen oder Stege aufweisen. Dieses Rührwerkzeug mag seine Aufgabe zwar effektiv erfüllen, ist aber in der Herstellung anspruchsvoll und kann wohl auch nur aus Metall gefertigt werden, um bei seiner komplizierten Form hinreichende Stabilität aufzuweisen.

EP 193128 A2 (SEB S.A.) offenbart ein Werkzeug, welches insbesondere für die Zubereitung von Marmeladen nützlich sein soll. Das Rührwerkzeug zeigt relativ große Rührschaufeln. Eine Rührschaufel ist in Rotationsrichtung und eine entgegen der Rotationsrichtung ausgerichtet. Die Rührschaufeln sind genau auf eine zu verwendende Rührschüssel abgestimmt. Mit einer anderen Rührschüssel ist das Rührwerkzeug offenkundig schlecht oder gar nicht zu verwenden. Wegen der Größe der Rührschaufeln ist auch ein erhebliches Drehmoment erforderlich, um sowohl ein hinreichendes Durchmischen als auch Zerkleinern von Früchten und dergleichen zu erreichen.

Die vorliegende Erfindung möchte die Schwächen im Stand der Technik vermeiden. Insbesondere soll ein gutes Durchmischen auch fester Rührteige mit einem einfach und preisgünstig herzustellenden Werkzeug ermöglicht werden. Dieses Werkzeug soll auch mit Küchenmaschinen einsetzbar sein, welche kein hohes Drehmoment zur Verfügung stellen können.

Diese Aufgabe wird durch ein Rührwerkzeug nach Anspruch 1 gelöst.

### Hauptmerkmale der Erfindung

Die vorliegende Erfindung betrifft ein Rührwerkzeug, vorzugsweise für eine Küchenmaschine. Insbesondere geht es um ein Rührwerkzeug, mit einem um eine Antriebsachse in einer Rotationsrichtung rotierbaren Nabenteil, wobei das Nabenteil eine erste Oberfläche hat, welche mindestens eine Senke aufweist, **dadurch gekennzeichnet, daß** im Bereich der Senke eine Aussparung vorgesehen ist, durch welche die erste Oberfläche mit einer zweiten Oberfläche des Nabenteils verbunden wird.

### Detaillierte Beschreibung der Erfindung

Erfindungsgemäß wird diese Aufgabe durch ein Rührwerkzeug, insbesondere zum Teigrühren gelöst, welches ein um eine Antriebsachse in einer Rotationsrichtung rotierbares Nabenteil aufweist. Dieses Nabenteil weist erfindungsgemäß mindestens eine erste Oberfläche auf, welche mindestens eine Senke aufweist.

Das Nabenteil kann ganz verschiedene Form haben, beispielsweise eine im Wesentlichen zylindrische Form, alternativ auch eine komplexere Form. Diese Form jedoch sollte mindestens eine Senke aufweisen. Als Senke kommt beispielsweise eine Vertiefung oder Mulde in der Oberfläche eines zylindrischen Nabenteils in Betracht. Bevorzugt sind nach dieser Erfindung jedoch Nabenteile, welche in mindestens einem achsfernen Bereich eine konvexe Form aufweisen. Besonders bevorzugt sind Nabenteile, welche konkav-konvexe Formen aufweisen. Beispielsweise kommt ein Nabenteil in Betracht, dessen Querschnitt in allen Radialebenen oder in mindestens einer Radialebene S-förmig ist. Ein solches S-förmiges Nabenteil weist eine zentrale Rotationsachse auf und daran schließend zwei Bogenstücke. Denkbar sind auch Nabenteile, welche drei oder vier solcher Bogenstücke aufweisen. Jeder Bogen hat in einer Richtung konvexe Form und, aus der anderen Richtung betrachtet, konkave Form. Es hat sich als vorteilhaft erwiesen, wenn die konvexe Form in Rotationsrichtung liegt. Dann nämlich führt sie zu einer besseren Durchmischung des Rührgutes und vermeidet Klumpenbildung in Achsnähe.

Konkave Flächen bilden immer auch Senken. Erfindungsgemäß soll nun im Bereich der mindestens einen Senke, welche eine Oberfläche des Nabenteils aufweist, eine Aussparung vorgesehen sein. Durch diese Aussparung soll die erste Oberfläche des Nabenteils mit der zweiten Oberfläche des Nabenteils verbunden werden.

Eine solche Aussparung kann einen mehrfachen Nutzen haben. Beispielsweise ist es möglich, daß eine begrenzte Menge Rührgut durch die Aussparung hindurch tritt. Dieses wiederum führt zu einer noch besseren Durchmischung von Rührgut, insbesondere solchen Rührgutes im Bereich der Rotationsachse, welches in der Regel wenig bewegt wird.

Die Aussparung kann in verschiedener axialer Höhe vorgesehen werden. Dadurch wird Einfluß darauf genommen, ob viel oder wenig Rührgut oder auch fast kein Rührgut durch die Aussparung tritt. Wenn die Aussparung relativ hoch liegt, also beispielsweise im oberen Drittel der Rotationsachse, tritt relativ wenig Rührgut durch die Aussparung, sofern das Rührwerkzeug so hoch ist, daß dieses Drittel nicht oder meistens nicht in das Rührgut eintaucht. Die Aussparung hat jedoch auch dann erheblichen Nutzen. Es hat sich gezeigt, daß beim Reinigen des Rührwerkzeugs, insbesondere in Spülmaschinen, je nach Position des Rührgutes leicht Restwasser in der Senke verbleibt. Die Aussparung erlaubt ein Abfließen des Restwassers in Richtung auf die andere Oberfläche. Je nach Lage des Rührwerkzeugs kann es auch zu einem Abfließen von Wasser durch die Aussparung in eine fast beliebige andere Richtung kommen. Die Aussparung macht also das Rührwerkzeug reinigungsfreundlicher und insbesondere spülmaschinentauglich.

Es gibt noch einen dritten relevanten Bereich, in welchem das Vorsehen einer Aussparung von Nutzen ist. Ein Rührwerkzeug wird häufig als Spritzgußteil hergestellt. Ein solches Spritzgußteil braucht jeweils eine Einspritzstelle. Häufig ist es vorteilhaft, die Einspritzstelle auf der Rotationsachse zentriert vorzusehen. Dazu gibt es im Wesentlichen zwei Möglichkeiten, nämlich einen Einspritzpunkt oben am Rührwerkzeug, d.h. in der Regel im Zentrum des Kupplungsteils oder alternativ einen Einspritzpunkt unten am Rührwerkzeug, d.h. in der Regel im Zentrum der Lagerstelle. In beiden Fällen kann sich ein eingespritzter Strahl von Material über die ganze Länge der Nabe ausbreiten. Dabei kann es zu einem sogenannten "Freistrahl" kommen, der spritztechnisch nicht erwünscht ist.

Wenn nun eine Aussparung im achsnahen Bereich der Nabe vorgesehen wird, führt dies dazu, daß die Spritzform in dem entsprechenden Bereich eine Brücke aufweist. Ein eingespritzter Strahl wird gegen diese Brücke treffen. Damit wird ein unkontrollierter Strahlverlauf oder "Freistrahl" vermieden.

Folglich ist es erfindungsgemäß vorteilhaft, daß die Rotationsachse durch die Aussparung verläuft. Ebenfalls ist es vorteilhaft, wenn die Aussparung im Bereich des oberen Drittels oder im Bereich des unteren Drittels der Rotationsachse vorgesehen ist.

Ein erfindungsgemäßes Rührwerkzeug kann in seinem unteren Drittel Rührarme aufweisen. Zusätzlich kann das Rührwerkzeug Mischflügel aufweisen, welche vorteilhafterweise in einem knickfreien Übergang in das Nabenteil übergehen.

Erfindungsgemäß wird auch ein beliebiges motorgetriebenes Küchengerät mit einem Rührwerkzeug, wie hierin beschrieben, zur Verfügung gestellt. Erfindungsgemäß wird ferner ein Verfahren zum Schlagen (und/oder Rühren) von Teig mit einem Rührwerkzeug der hierin beschriebenen Art zur Verfügung gestellt.

Das erfindungsgemäße Rührwerkzeug kann neben den beschriebenen Rührarmen noch Rührarme oder sogenannte Mischflügel anderen Typs enthalten. In Frage kommen beispielsweise Rührarme oder sogenannte Mischflügel kurzer Länge aber großer Fläche, die das Mischen von Rührgut in der Nähe des Nabenteils fördern.

Das Rührwerkzeug kann insgesamt aus einem Material hergestellt werden. Vorteilhafterweise kann es im Spritzgussverfahren hergestellt werden. Besonders Kunststoff, insbesondere Polyoxymethylen (POM). Andere technische Kunststoffe mit guter Steifigkeit und guten Reibwerten, welche somit auch eine gute untere Lagerstelle ausbilden können, sind auch einsetzbar.

Das Verfahren zum Schlagen von Teig wird vorteilhafterweise mit 800 bis 1000 Umdrehungen pro Minute ausgeführt. Im Vergleich zum Schlagen von Teig mit anderen Werkzeugen ist ein deutlich reduziertes Drehmoment erforderlich. Dies gilt insbesondere für das Schlagen schwerer Teige. Als Referenzteig kann Mürbeteig dienen. Das Schlagen eines Referenz-Mürbeteigs mit einem konventionellen Küchenmaschinenaufsatz, wie etwa dem Knethaken des Braun-Gerätes K700 erfordert bis zu 1 Nm Drehmoment. Das erfinderische Rührwerkzeug erlaubt es jedoch einen solchen Teig mit einem Drehmoment von maximal 0,5 Nm zu rühren.

Zum besseren Verständnis der Erfindung sollen auch die nachfolgenden Abbildungen dienen. Soweit hierin und in dem zugehörigen Erläuterungstext technische Merkmale in bestimmter Kombination vorgestellt werden, sind diese auch als einzeln und in anderen Kombinationen offenbart zu betrachten, soweit solche Kombinationen technisch sinnvoll und möglich sind. Bei den Abbildungen zeigen:
- Fig. 1: eine perspektivische Gesamtansicht des Rührwerkzeuges,
- Fig. 2: eine Seitenansicht des Rührwerkzeuges.

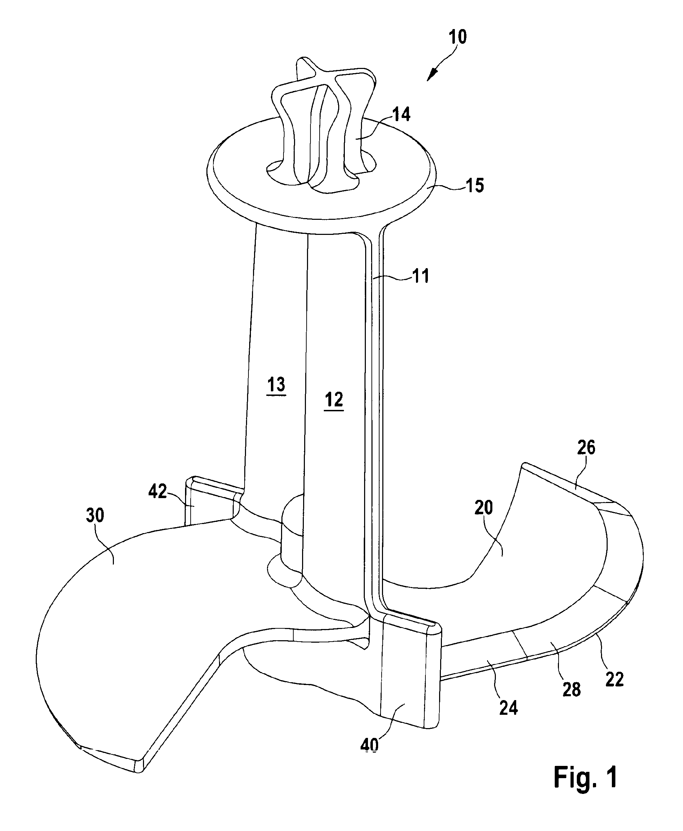

Fig. 1 läßt in perspektivischer Ansicht das Rührwerkzeug 10 und seine Hauptelemente erkennen. Dazu gehört insbesondere das Nabenteil 11. Wie schon in dieser Ansicht erkennbar, ist das Nabenteil in seinem Querschnitt im Wesentlichen wellenförmig gestaltet. Das Nabenteil 11 weist also einen ersten Bogen 12 auf, der in dieser Ansicht konvex auf den Betrachter zu gewölbt ist, und einen sich daran anschließenden zweiten Bogen 13, der in dieser Ansicht konkav ist. Dies erlaubt, mit wenig Material hohe Drehmomente zu übertragen und hat zusätzlich den Effekt, daß auch das Nabenteil einen Beitrag zum Durchmischen von Teig leisten kann. Oben an das Nabenteil 11 schließt sich ein Ring 15 und daran das obere Kupplungsteil 14 an. Mit diesem Kupplungsteil 14 kann das Rührwerkzeug 10 bequem in eine Antriebseinheit eingesetzt werden. Als Antriebseinheit kommt beispielsweise der obere Deckel eines Rührtopfes in Betracht, welcher mit einem Motorteil verbunden ist. Unten erkennt man den ersten Rührarm 20 und gegenüberliegend den zweiten Rührarm 30. Ferner sind um 90° versetzt zur durch die beiden Rührarme definierten Richtung zwei Mischflügel vorgesehen, nämlich ein erster Mischflügel 40 und gegenüberliegend ein zweiter Mischflügel 42. Beim ersten Rührarm 20 erkennt man zum Betrachter hingewandt die Schlagfläche 22. Radial innen liegend ist der Teil 24 der Schlagfläche, während sich der Teil 26 als radial außen liegender Teil anschließt. Der Betrachter blickt auf die Schrägfläche 28, welche sich beim ersten Rührarm 20 an die Schlagfläche 22 anschließt und nach oben gerichtet ist.

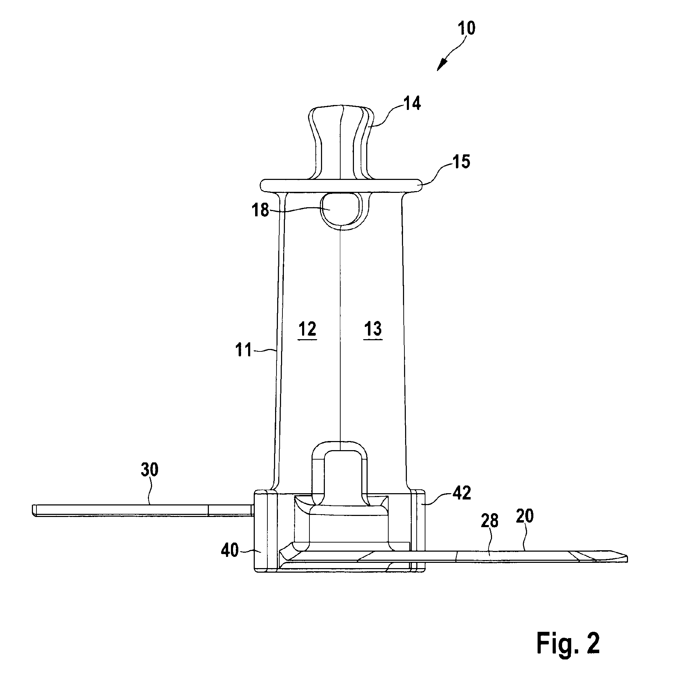

Fig. 2 zeigt eine Seitenansicht des Rührwerkzeugs 20. Als markante Elemente sind wiederum das Nabenteil 11 zu erkennen und der obere Kupplungsteil 14. Ferner erkennt man den ersten Rührarm 20 und den zweiten Rührarm 30 sowie den ersten Mischflügel 40 und den zweiten Mischflügel 42. Die Mischflügel sind entlang der Richtung der Drehachse von gleicher Höhe. Man erkennt an dieser Ansicht ebenfalls besonders gut, daß der erste Rührarm 20 unterhalb des zweiten Rührarms 30 angeordnet ist. (Unterhalb bedeutet hier in Richtung der Rotationsachse gesehen, näher auf die Lagerstelle zu.) Die Anordnung von Rührarmen in verschiedener Höhe hat sich als besonders effektiv für gutes Durchkneten besonders schwerer Teige erwiesen. Dabei ist es vorteilhaft, wenn der untere Rührarm eine nach oben gerichtete Schrägfläche 28 aufweist.

Man erkennt an der Abbildung ferner, daß im Nabenteil 11 eine Aussparung 18 vorgesehen ist. Diese ist so positioniert, daß das Nabenteil trotz der durch die Aussparung erreichten Materialeinsparung ein hohes Drehmoment übertragen kann.

Aus der Beschreibung ist insgesamt deutlich geworden, wie ein Rührwerkzeug hergestellt werden kann, mit dem auch schwere Teige effektiv gerührt werden können und welches sogar mit einem Antrieb von geringem Drehmoment auskommt.

### Bezugszeichenliste:

- 10: Rührwerkzeug
- 11: Nabenteil
- 12: erster Bogen
- 13: zweiter Bogen
- 14: oberes Kupplungsteil
- 15: Ring
- 16: Lagerstelle
- 18: Aussparung
- 20: erster Rührarm
- 22: Schlagfläche
- 24: radial innen liegender Teil
- 26: radial außen liegender Teil
- 27: äußerer Endbereich
- 28: Schrägfläche
- 30: zweiter Rührarm
- 40: erster Mischflügel
- 42: zweiter Mischflügel

## Patentansprüche

1. Rührwerkzeug (10), insbesondere zum Teigrühren, mit einem um eine Antriebsachse in einer Rotationsrichtung um eine Rotationsachse rotierbaren Nabenteil (11), wobei das Nabenteil (11) eine erste Oberfläche hat, welche mindestens eine Senke aufweist, **dadurch gekennzeichnet, daß** im Bereich der Senke eine Aussparung (18) vorgesehen ist, durch welche die erste Oberfläche mit einer zweiten Oberfläche des Nabenteils verbunden wird.

2. Rührwerkzeug (10) nach Anspruch 1, bei dem die Aussparung (18) im Bereich der Rotationsachse vorgesehen ist, so dass die Rotationsachse durch die Aussparung (18) verläuft.

3. Rührwerkzeug (10) nach Anspruch 1 oder 2, bei dem die Aussparung (18) im Bereich des oberen Drittels der Rotationsachse vorgesehen ist.

4. Rührwerkzeug (10) nach Anspruch 1 oder 2, dessen Querschnitt in mindestens einer Radialebene S-förmig ist.

5. Rührwerkzeug (10) nach einem der vorhergehenden Ansprüche, welches im Bereich des unteren Drittels der Rotationsachse ferner Rührarme (20, 30) aufweist.

6. Rührwerkzeug (10) nach einem der vorhergehenden Ansprüche, das Mischflügel (40, 42) aufweist, welche in einem knickfreien Übergang in das Nabenteil (11) übergehen.

7. Rührwerkzeug (10) nach einem der vorhergehenden Ansprüche, welches als Spritzgussteil hergestellt ist.

8. Rührwerkzeug (10) nach Anspruch 7, bei welchem die Einspritzstelle im Bereich des oberen Drittels der Rotationsachse vorgesehen ist.

9. Rührwerkzeug (10) nach Anspruch 8, bei welchem die Einspritzstelle im Wesentlichen in Verlängerung der Rotationsachse vorgesehen ist.

10. Motorgetriebenes Küchengerät mit einem Rührwerkzeug (10) nach einem der vorhergehenden Ansprüche.

11. Verfahren zum Schlagen von Teig mit einem Rührwerkzeug (10) nach einem der vorhergehenden Ansprüche.
